# EUROPÄISCHE PATENTSCHRIFT

(11) **EP 4 324 573 B1**
(45) Veröffentlichungstag und Bekanntmachung des Hinweises auf die Patenterteilung: **19.02.2025**
(21) Anmeldenummer: 23190563.9
(22) Anmeldetag: 09.08.2023
(51) Int. Cl.: B21D 5/08, B21B 35/14, F16D 1/10, F16D 3/18, F16C 3/03, F16D 3/06

(54) **KUPPELVORRICHTUNG UND ROLLFORMANLAGE**
COUPLING DEVICE AND ROLL FORMING APPARATUS
DISPOSITIF D'ACCOUPLEMENT ET INSTALLATION DE PROFILAGE À ROULEAUX

(30) Priorität: 15.08.2022 DE 102022120537
(43) Veröffentlichungstag der Anmeldung: 21.02.2024
(73) Patentinhaber: XELLAR Technologies GmbH, 97828 Marktheidenfeld (DE)
(72) Erfinder: Rauch, Michael, 97289 Thüngen (DE)
(74) Vertreter: Witte, Weller & Partner Patentanwälte mbB

(56) Entgegenhaltungen:
- EP-A1- 2 251 110
- EP-A1- 2 452 760
- EP-A1- 3 311 932
- WO-A2-2015/085340

## Beschreibung

Die vorliegende Offenbarung betrifft eine Kuppelvorrichtung zur Verbindung eines Antriebsblocks mit zumindest einer Arbeitswelle eines Rollformgerüsts, die zumindest eine Gelenkwelle mit einem antriebsseitigen Ende und einem abtriebsseitigen Ende, wobei das abtriebsseitige Ende mit einem Eingangsabschnitt einer Arbeitswelle des Rollformgerüsts verbindbar ist, und eine automatisierte Betätigungseinheit zum Einrücken und Ausrücken der Gelenkwelle aufweist. Ferner betrifft die vorliegende Offenbarung eine Rollformanlage mit einer solchen Kuppelvorrichtung.

Aus der EP 3 311 932 A1, auf welche der Oberbegriff des Patentanspruchs 1 basiert, , 2 ist eine Kuppelvorrichtung für eine Profiliermaschine bekannt, die eine Bewegungsvorrichtung zum Ausgleich des Axialversatzes und des Vertikalversatzes zwischen einer Gelenkwelle und einer Arbeitswelle umfasst, wobei die Bewegungsvorrichtung zwei Antriebe in Form von Linearzylindern aufweist. Beim Ankuppeln wird die Abtriebsseite der Gelenkwelle zunächst axial bewegt, bis im Falle eines Vertikalversatzes eine vertikale Gleitfläche der Gelenkwelle einen Kupplungszapfen der Arbeitswelle trifft. Es schließt sich dann eine vertikale Bewegung der Abtriebsseite der Gelenkwelle an, bis eine Kupplungshülse an der Abtriebsseite der Gelenkwelle und der Kupplungszapfen der Arbeitswelle ineinander einrücken können. Mit anderen Worten sind zwei Antriebe für einen Einkuppelvorgang einer Gelenkwelle erforderlich.

Eine Kuppelvorrichtung mit zumindest teilweise automatisierter Betätigung ist aus der EP 2 452 760 A1 bekannt. Bei Kuppelvorgängen zur Ankopplung und Abkopplung von Arbeitswellen von Rollformgerüsten ist es häufig erforderlich, sowohl einen Axialversatz als auch einen Radialversatz (auch: Parallelversatz) zwischen einer Antriebswelle und der Arbeitswelle auszugleichen. Zu diesem Zweck sind regelmäßig Gelenkwellen vorgesehen, die beispielsweise als Kardanwellen gestaltet sind. Ein antriebsseitiges Ende einer solchen Gelenkwelle ist üblicherweise mit der Antriebswelle verbunden. Ein gegenüberliegendes abtriebsseitiges Ende ist beim Betrieb des Rollformgerüsts mit einer Arbeitswelle des Rollformgerüsts verbunden.

Aus der EP 0 365 976 A2 ist eine allgemeine Gestaltung einer Profiliermaschine (auch: Rollformmaschine) bekannt, die mehrere sogenannte Kupplungsgerüste aufweist, mit denen eine Verbindung zwischen einem Getriebeblock eines Antriebs und Rollformgerüsten ermöglicht wird. Profiliermaschinen und Rollformanlagen dienen regelmäßig zur Verarbeitung und Bearbeitung von Metallbändern und ähnlichem. Ein Halbzeug in Form eines Metallbands oder Ausgangsprofils wird mittels Längsumformen in ein Zielprofil überführt. Rollformanlagen können auch zusätzliche Bearbeitungsschritte ermöglichen, beispielsweise Stanzprozesse, Schweißprozesse und ähnliches. Nach der gewünschten Umformung und Bearbeitung kann das Zielprofil abgelängt werden, um Werkstücke gewünschter Länge zu gewinnen.

Rollformgerüste für Rollformanlagen sind üblicherweise verstellbar, um verschiedene Rollprofile aufnehmen zu können. Regelmäßig weist ein Rollformgerüst zwei übereinander angeordnete Arbeitswellen (obere Welle und untere Welle) auf, deren vertikale Position absolut und relativ zueinander verstellbar ist. Rollformgerüste können auch entlang einer Transferrichtung des zu verarbeitenden Halbzeugs verstellt werden, um auf diese Weise Einfluss auf den Fertigungsprozess nehmen zu können. Antriebsblöcke umfassen regelmäßig eine Mehrzahl von Antriebswellen, die über einen oder mehrere Antriebe antreibbar sind. Die Antriebswellen sind innerhalb eines Antriebsblocks häufig ortsfest, so dass häufig ein Ausgleich zwischen einer Position der Arbeitswellen eines Rollformgerüsts und einer Position der diesen zugeordneten Antriebswellen im Antriebsblock erforderlich ist.

Ein Kuppelvorgang erfordert üblicherweise einen Ausgleich des Axialversatzes und einen Ausgleich des Radialversatzes zwischen den beteiligten Wellen. Daher sind häufig mehrere Bewegungsfreiheitsgrade vorgesehen, die bei einer automatisierten Betätigung entsprechend zu berücksichtigen sind. Es ist grundsätzlich auch ein manuelles Ankoppeln und Abkoppeln vorstellbar, dies umfasst jedoch gerade bei einer hohen Anzahl von Rollformgerüsten einen erheblichen Arbeitsaufwand. Dies erschwert beispielsweise das Umrüsten einer Rollformanlage bei der Umstellung zwischen zwei verschiedenen Werkstücken.

Vor diesem Hintergrund liegt der vorliegenden Offenbarung zugrunde, eine Kuppelvorrichtung für eine Rollformanlage und eine mit einer solchen Kuppelvorrichtung versehene Rollformanlage anzugeben, bei denen ein automatisiertes Ankuppeln und Abkuppeln der Arbeitswellen ermöglicht ist, so dass etwaige Rüstvorgänge und Einstellvorgänge schnell und mit geringem Aufwand vonstattengehen können. Das Einrücken und Ausrücken soll möglichst einfach und zuverlässig vonstattengehen können. Eine hohe Wiederholgenauigkeit des Kuppelvorgangs wird angestrebt. Die Kuppelvorrichtung soll mit geringem Aufwand herstellbar sein. Die Kuppelvorrichtung soll sich auch zur Nachrüstung älterer Profiliermaschinen und Rollformanlagen eignen, zumindest in beispielhaften Ausgestaltungen.

Diese Aufgabe wird bei einer Kuppelvorrichtung der eingangs genannten Art dadurch gelöst, dass die Betätigungseinheit einen Koppelmechanismus mit einer Führungskulisse aufweist, der zumindest beim Einrücken der Gelenkwelle einen Axialversatz und einen Radialversatz zwischen dem abtriebsseitigen Ende der Gelenkwelle und dem Eingangsabschnitt der Arbeitswelle ausgleicht, wobei die Führungskulisse einen sowohl gegenüber einer Richtung des Axialversatzes als auch gegenüber einer Richtung des Radialversatzes geneigten Abschnitt aufweist, und wobei das abtriebsseitige Ende und der Eingangsabschnitt entlang des geneigten Abschnitts relativ zueinander verfahrbar sind, um die Gelenkwelle mit der Arbeitswelle zu koppeln.

Mit anderen Worten trägt also der Koppelmechanismus dazu bei, dass beide Versatzkomponenten zumindest beim Einrücken berücksichtigt und ausgeglichen werden. Idealerweise kann also mit wenigen Antriebskomponenten eine relativ komplexe Ausgleichsbewegung durchgeführt werden. Damit vereinfacht sich das automatisierte Ankoppeln und Abkoppeln der Arbeitswellen des Rollformgerüsts. In einer beispielhaften Ausgestaltung ist es vorstellbar, dass der Koppelmechanismus beim Ausrücken den ursprünglichen Versatz wieder herbeiführt, etwa beim Überführen der Gelenkwellen in eine Ruheposition.

Sofern im Rahmen der vorliegenden Offenbarung von einem Ausgleich eines Axialversatzes und/oder eines Radialversatzes die Rede ist, wird primär darauf abgestellt, dass ein Ausgleich in einem Maße zu erfolgen hat, der ein einfaches und sicheres Einrücken/Einkuppeln ermöglicht. Dies heißt mit anderen Worten, dass je nach Toleranzunempfindlichkeit der beteiligten Kupplungsteile kein absolut vollständiger Ausgleich nötig ist. Aufgrund der Freiheitsgrade bei der Vorstellung und Positionierung der Rollformgerüste bzw. von deren Arbeitswellen ist jedoch regelmäßig mit einem deutlichen Axialversatz und/oder Radialversatz zu rechnen, der zumindest hinreichend kompensiert werden muss, damit ein Kuppeln des abtriebsseitigen Endes der Gelenkwellen und des Eingangsabschnitts der Arbeitswellen ermöglicht ist. Der Koppelmechanismus erleichtert ferner das Auskuppeln/Entkoppeln von Gelenkwellen und Arbeitswellen. Mit anderen Worten kann der Koppelmechanismus auch in einem unmittelbar gelösten Zustand definierte Orientierungen bereitstellen, beispielsweise für das jeweilige abtriebsseitige Ende der Gelenkwellen.

Die Gelenkwellen sind beispielhaft als Kardanwelle gestaltet, wobei zwei Kreuzgelenke vorgesehen sind, von denen eines beim antriebsseitigen Ende und eines beim abtriebsseitigen Ende angeordnet ist. Dazwischen ist beispielhaft ein Schubgelenk zur Realisierung des erforderlichen Längsausgleichs verbaut.

Ein Axialversatz ist beispielhaft ein (stirnseitiger) Abstand zwischen einander zugewandten Kupplungsteilen des abtriebsseitigen Endes der Gelenkwellen und des Eingangsabschnitts der Arbeitswellen. Ein Radialversatz ist beispielhaft ein Abstand zwischen Längsachsen durch das abtriebsseitige Ende der Gelenkwellen und den Eingangsabschnitt der Arbeitswellen.

In einer beispielhaften Ausgestaltung ist beim Betrieb der Kuppelvorrichtung, insbesondere beim Einkoppeln und Auskuppeln eine zumindest im Wesentlichen parallele Orientierung zwischen der Längsachse des abtriebsseitigen Ende der Gelenkwelle und der Längsachse des Eingangsabschnitts der Arbeitswelle gewahrt.

Beim Betrieb der Rollformanlage ist ein Antrieb mit zumindest einem zugehörigen Antriebsblock im Wesentlichen stationär angeordnet. Der Antriebsblock weist eine Mehrzahl von Antriebsanschlüssen auf, die jeweils über eine Gelenkwelle eine Arbeitswelle antreiben können. Die Rollformgerüste, die die Arbeitswellen tragen, sind in verschiedenen Freiheitsgraden verstellbar. Für eine Bearbeitung mit hohem Umformungsgrad ist eine Mehrzahl oder Vielzahl von Rollformgerüsten mit entsprechenden Arbeitswellen erforderlich. Beim Wechsel zwischen unterschiedlichen Werkstücken muss daher die Rollformanlage umgerüstet werden. Eine automatisierte Kuppelvorrichtung vereinfacht diesen Vorgang deutlich.

In einer beispielhaften Ausgestaltung ist zum Einrücken und Ausrücken der Gelenkwelle mit der Arbeitswelle lediglich ein einziger Aktuator erforderlich. Mit anderen Worten ist zur Betätigung der Kuppelvorrichtung, zumindest zum Einkuppeln und Auskuppeln einer Gelenkwelle, lediglich ein einziger Aktuator erforderlich, wobei gleichwohl die Kompensation des Versatzes in zwei Richtungen ermöglicht ist. Auf diese Weise verringert sich der bauliche und steuerungstechnische Aufwand für die Kuppelvorrichtung deutlich.

Die Führungskulisse bewerkstelligt zumindest beim Einrücken der Gelenkwelle eine Zwangsführung bei der Relativbewegung zwischen dem abtriebsseitigen Ende der Gelenkwelle und dem Eingangsabschnitt der Arbeitswelle. Es versteht sich, dass die Zwangsführung gegebenenfalls auch beim Ausrücken zum Tragen kommen kann.

Die Führungskulisse kann eine Umlenkung zwischen einer Antriebsbewegung und einer resultierenden Bewegung bewirken. Auf diese Weise kann auch bei einem deutlichen Versatz eine Annäherung zwischen dem abtriebsseitigen Ende der Gelenkwellen und dem Eingangsabschnitt der Arbeitswellen erfolgen.

Die Führungskulisse stellt eine Zwangsführung bereit. Mit anderen Worten muss bei einer resultierenden Bewegung in mehreren Achsen zum Ausgleich des Axialversatzes und des Radialversatzes keine komplexe Antriebssteuerung oder dergleichen vorgesehen sein. Sofern ein gegebener Axialversatz und/oder Radialversatz innerhalb einer tolerierbarem Bandbreite liegt, kann durch die Zwangsführung eine Überwindung des jeweiligen Versatzes gewährleistet werden.

Die Führungskulisse weist einen sowohl gegenüber einer Richtung des Axialversatzes als auch gegenüber einer Richtung des Radialversatzes geneigten Abschnitt auf. Auf diese Weise kann mit nur einer Antriebsbewegung, die durch einen Aktuator bereitgestellt wird, sowohl der Axialversatz als auch der Radialversatz zumindest teilweise kompensiert werden.

Allgemein kann die Führungskulisse und die gesamte Kuppelvorrichtung auch dazu ausgelegt sein, einen gewissen (geringen) Winkelversatz/Angularversatz zwischen dem abtriebsseitigen Ende der Gelenkwelle und dem Eingangsabschnitt der Arbeitswelle auszugleichen. Dies kann beispielhaft durch entsprechende Einführhilfen und/oder eine Winkelversatz ausgleichende Kupplung bewerkstelligt werden.

Gemäß einer weiteren beispielhaften Ausgestaltung weist die Führungskulisse im Anschluss an den geneigten Abschnitt einen sich zu einer Längsachse der Arbeitswelle parallel erstreckenden Abschnitt auf. Auf diese Weise kann der geneigte Abschnitt zur Überwindung eines Radialversatzes genutzt werden. Sofern eine hinreichende Konzentrizität zwischen dem abtriebsseitigen Ende der Gelenkwelle und dem Eingangsabschnitt der Arbeitswelle hergestellt ist, kann der sich anschließende Abschnitt, der parallel zur Längsachse der Arbeitswelle orientiert ist, zur Überwindung des verbliebenen Axialversatzes genutzt werden.

Gemäß einer weiteren beispielhaften Ausgestaltung ist die Führungskulisse benachbart zum Eingangsabschnitt der Arbeitswelle beim Rollformgerüst angeordnet. Mit anderen Worten dient die Führungskulisse bei dieser Ausgestaltung als Einführhilfe für das abtriebsseitige Ende der Gelenkwelle, wenn sich diese dem Eingangsabschnitt der Arbeitswelle nähert. Die Führungskulisse ist damit zumindest temporär am Rollformgerüst festgelegt.

Gemäß einer weiteren beispielhaften Ausgestaltung weist der Koppelmechanismus zumindest eine entlang der Führungskulisse verfahrbare Führungsrolle auf, die gemeinsam mit dem abtriebsseitigen Ende der Gelenkwelle verfahrbar ist. Damit kann sich das abtriebsseitige Ende der Gelenkwelle beim Einkoppeln und Auskuppeln an der Führungskulisse abstützen und relativ zur Führungskulisse bewegt werden. Eine Führungsrolle erlaubt eine reibungsarme Bewegung. Alternativ zur Führungsrolle ist es auch vorstellbar, dass als Führungselement ein Führungsbolzen, eine Führungskufe o. ä. dient. Auch eine Nutzung zweier voneinander beabstandeter Führungselemente ist vorstellbar, etwa zweier axial versetzter Führungsrollen. Dies reduziert die Anfälligkeit gegenüber Querkräften.

Es ist grundsätzlich auch eine umgekehrte Zuordnung vorstellbar, bei der die Führungskulisse beim abtriebsseitigen Ende der Gelenkwelle angeordnet und gemeinsam mit diesem in Bezug auf den Eingangsabschnitt der Arbeitswelle verfahrbar ist. Demgemäß wäre dann eine der Führungskulisse zugeordnete Führungsrolle beim Eingangsabschnitt der Arbeitswelle angeordnet.

Gemäß einer weiteren beispielhaften Ausgestaltung weist der Koppelmechanismus ein verfahrbares Lagerstück auf, das beim abtriebsseitigen Ende der Gelenkwelle angeordnet ist und zumindest beim Einrücken der Gelenkwelle mit der Führungskulisse zusammenwirkt, wobei das verfahrbare Lagerstück insbesondere eine Führungsrolle oder einen Führungsbolzen trägt. Das verfahrbare Lagerstück wird durch einen Aktuator der automatisierten Betätigungseinheit bewegt. Das verfahrbare Lagerstück ist mit der Führungskulisse gekoppelt, so dass die resultierende Bewegung umgelenkt wird.

Am/im Lagerstück ist das abtriebsseitige Ende der Gelenkwelle verdrehbar zu diesem gelagert. Die Gelenkwelle kann sich also bei ihrer Rotation im Lagerstück bewegen. Das verfahrbare Lagerstück bewegt bei seiner Bewegung das abtriebsseitige Ende der Gelenkwelle mit. Das verfahrbare Lagerstück definiert ferner eine Orientierung der Längsachse durch das abtriebsseitige Ende der Gelenkwelle. In einer beispielhaften Ausgestaltung beherbergt das verfahrbare Lagerstück das abtriebsseitige Ende der Gelenkwelle, das drehbar darin gelagert ist.

Gemäß einer weiteren beispielhaften Ausgestaltung weist der Koppelmechanismus eine erste Führung und eine schräg zur ersten Führung orientierte zweite Führung auf, wobei die zweite Führung verschieblich an der ersten Führung gehalten ist, und wobei das Lagerstück entlang der zweiten Führung verschieblich ist. Bei der ersten Führung und der zweiten Führung handelt es sich beispielsweise um Linearführungen. Die erste Führung und die zweite Führung stellen in Kombination einen (beispielhaft zweidimensionalen) Verfahrbereich für das verfahrbare Lagerstück bereit, das wiederum mit der durch die Führungskulisse bereitgestellten Zwangsführung gekoppelt ist. Zumindest in beispielhaften Ausgestaltungen wird die erste Führung als vertikale Linearführung und die zweite Führung als horizontale Linearführung bezeichnet.

Beispielhaft ist die erste Führung vertikal orientiert. Beispielhaft ist die zweite Führung horizontal orientiert. Eine umgekehrte Zuordnung ist grundsätzlich denkbar. Die Bezeichnung erste Führung und zweite Führung dient vorrangig zu Unterscheidungszwecken. In einer beispielhaften Ausgestaltung ist die erste Führung diejenige Führung, die näher bei einem Gestell/einer Basis der Rollformanlage angeordnet ist als die zweite Führung.

Im Rahmen der vorliegenden Offenbarung handelt es sich bei einer Führung üblicherweise um eine Einheit mit zwei Komponenten, umfassend eine Schiene sowie einen Schlitten, die relativ zueinander verfahrbar sind. Dies kann eine Linearbewegung des Schlittens entlang der Schiene umfassen. Dies kann jedoch auch eine Linearbewegung der Schiene entlang des Schlittens umfassen.

Gemäß einer weiteren beispielhaften Ausgestaltung ist zumindest die zweite Führung mit einem Vorspannelement gekoppelt, das die zweite Führung in eine Ruhelage drängt. Beispielhaft gleich das Vorspannelement die auf die zweite Führung wirkende Schwerkraft entlang des durch die erste Führung bereitgestellten Bewegungsfreiheitsgrades aus. Bei einer beispielhaften Ausgestaltung der Kuppelvorrichtung für ein Rollformgerüst mit zwei übereinander angeordneten Arbeitswellen drängt das Vorspannelement die zweite Führung eines oberen Lagerstücks für die obere Gelenkwelle nach oben. Bei einer beispielhaften Ausgestaltung der Kuppelvorrichtung wird die Ruhelage der zweiten Führung eines unteren Lagerstücks für eine untere Gelenkwelle selbsttätig Schwerkraft unterstützt erreicht. Gleichwohl ist auch für eine untere Einheit die Nutzung eines Vorspannelements denkbar.

Gemäß einer weiteren beispielhaften Ausgestaltung weist die Betätigungseinheit einen gemeinsamen Aktuator für die Bewegung entlang der ersten Führung und entlang der zweiten Führung auf. Auf diese Weise genügt eine einzige Antriebsbewegung in einer einzigen Richtung auf das Lagerstück, um im Ergebnis eine zweidimensionale Bewegung des Lagerstücks in zwei Richtungen zu bewirken. Dies wird durch die Führungskulisse ermöglicht, die die Bewegung des Lagerstücks umlenkt. Die erste Führung und die zweite Führung stellen für das Lagerstück einen entsprechenden Bewegungsbereich bereit.

Der gemeinsame Aktuator ist beispielsweise ein gemeinsamer fluidischer Zylinder mit ausfahrbarer Stange. Hierbei kann es sich um einen Pneumatikzylinder, einen Hydraulikzylinder oder Ähnliches handeln. Auch ein elektrischer Aktuator ist vorstellbar, beispielsweise ein Spindelantrieb und/oder ein Linearmotor.

Gemäß einer weiteren beispielhaften Ausgestaltung umfasst die Kuppelvorrichtung Folgendes:
- eine erste Gelenkwelle mit einem antriebsseitigen Ende und einem abtriebsseitigen Ende, wobei das abtriebsseitige Ende mit einer ersten Arbeitswelle der Rollformgerüsts verbindbar ist,
- eine zweite Gelenkwelle mit einem antriebsseitigen Ende und einem abtriebsseitigen Ende, wobei das abtriebsseitige Ende mit einer ersten Arbeitswelle der Rollformgerüsts verbindbar ist,
   wobei die Betätigungseinheit einen ersten Betätigungsabschnitt zum Einrücken und Ausrücken der ersten Gelenkwelle und einen zweiten Betätigungsabschnitt zum Einrücken und Ausrücken der zweiten Gelenkwelle aufweist, und
   wobei der erste Betätigungsabschnitt und der zweite Betätigungsabschnitt jeweils einen Koppelmechanismus aufweisen, der zumindest beim Einrücken der Gelenkwelle einen Axialversatz und einen Radialversatz zwischen dem abtriebsseitigen Ende der Gelenkwelle und dem Eingangsabschnitt der Arbeitswelle ausgleicht.

Damit weist die Kuppelvorrichtung eine erste Einheit und eine zweite Einheit auf. Die erste Einheit kann beispielhaft als untere Einheit bezeichnet werden und zur Kopplung einer unteren Gelenkwelle mit einer unteren Arbeitswelle des Rollformgerüsts ausgebildet sein. Die zweite Einheit kann beispielhaft als obere Einheit bezeichnet werden und zur Kopplung einer oberen Gelenkwelle mit einer oberen Arbeitswelle des Rollformgerüsts ausgebildet sein. Auf diese Weise kann sich eine zumindest grundsätzlich symmetrische Gestaltung mit horizontaler Symmetrieebene ergeben. Es versteht sich, dass auch eine nicht-symmetrische Gestaltung vorstellbar ist.

Gemäß einer weiteren beispielhaften Ausgestaltung ist vorgesehen, dass die Betätigungseinheit die erste Gelenkwelle und die zweite Gelenkwelle gemeinsam einrückt oder ausrückt. Dies kann eine geeignete gemeinsame Ansteuerung eines ersten Aktuators für die erste Gelenkwelle und eines zweiten Aktuators für die zweite Gelenkwelle umfassen. Es ist grundsätzlich auch vorstellbar, einen einzigen Aktuator vorzusehen, der gemeinsam auf die verfahrbaren Lagerstücke der ersten Gelenkwelle und der zweiten Gelenkwelle einwirkt. Auf diese Weise kann insgesamt eine komplexe mehrdimensionale Bewegung sowohl bei der ersten Gelenkwelle als auch der zweiten Gelenkwelle mit nur zwei Aktuatoren oder gar mit einem einzigen Aktuator realisiert werden.

Gemäß einer weiteren beispielhaften Ausgestaltung weisen der erste Betätigungsabschnitt und der zweite Betätigungsabschnitt einen gemeinsamen Aktuator zum Einrücken oder Ausrücken der ersten Gelenkwelle und der zweiten Gelenkwelle auf. Es gibt also einen gemeinsamen Aktuator für beide Gelenkwellen.

Gemäß einer weiteren beispielhaften Ausgestaltung weisen der erste Betätigungsabschnitt einen ersten Aktuator zum Einrücken oder Ausrücken der ersten Gelenkwelle und der zweite Betätigungsabschnitt einen zweiten Aktuator zum Einrücken oder Ausrücken der zweiten Gelenkwelle auf. Es gibt also für jede Gelenkwelle einen Aktuator.

Gemäß einer weiteren beispielhaften Ausgestaltung ist das abtriebsseitige Ende der zumindest einen Gelenkwelle über eine Bogenzahnkupplung mit dem Eingangsabschnitt der Arbeitswelle verbindbar. Allgemein ist eine Gestaltung als Zahnkupplung oder Klauenkupplung vorstellbar. Die Kupplung sollte eine gewisse Robustheit gegenüber (gegebenenfalls geringen) Toleranzabweichungen gewährleisten.

Eine Bogenzahnkupplung ist zumindest hinreichend tolerant gegenüber Drehabweichungen und gegebenenfalls auch Winkelfehlern (Angularversatz). Eine Bogenzahlkupplung ist gegebenenfalls auch hinreichend tolerant gegenüber Axialabweichungen. Damit kann eine Bogenzahlkupplung dazu beitragen, dass keine allerhöchste Genauigkeit bei der Annäherung zwischen dem abtriebsseitigen Ende der Gelenkwellen und dem Eingangsabschnitt der Arbeitswellen gewährleistet sein muss.

Gemäß einer weiteren beispielhaften Ausgestaltung weist die Bogenzahnkupplung einen ersten Kupplungsteil mit einer als Innenverzahnung gestalteten Bogenverzahnung und einen zweiten Kupplungsteil mit einer als Außenverzahnung gestalteten Bogenverzahnung auf. Es versteht sich, dass in einer alternativen Ausgestaltung auch eine umgekehrte Zuordnung vorstellbar ist.

Gemäß einer weiteren beispielhaften Ausgestaltung ist die zumindest eine Gelenkwelle in einem Einrückmodus drehoszillierend antreibbar, um das Einrücken zwischen dem ersten Kupplungsteil und dem zweiten Kupplungsteil zu vereinfachen. Wenn sich also die beiden Kupplungsteile einander nähern, wird die Gelenkwelle um geringe Winkelbeträge drehoszillierend angetrieben, damit sich die Zähne und Lücken der Kupplung finden können. Der Antriebsblock, der die Gelenkwellen und damit schlussendlich die Arbeitswellen der Rollformanlage antreibt, ist üblicherweise mit einer Antriebssteuerung gekoppelt, die entsprechende Steuereingriffe vornehmen kann.

Gemäß einer weiteren beispielhaften Ausgestaltung ist daher eine Kombination aus einer Kuppelvorrichtung gemäß zumindest einer der hierin beschriebenen Ausgestaltungen und einem Antriebsblock vorgesehen, dem eine Antriebssteuerung zugeordnet ist, wobei die Antriebssteuerung dazu ausgebildet ist, die zumindest eine Gelenkwelle in einem Einrückmodus drehoszillierend anzutreiben, um das Einrücken der Bogenzahnkupplung zu vereinfachen.

Gemäß einem weiteren Aspekt bezieht sich die vorliegende Offenbarung auf eine Rollformanlage mit einer Mehrzahl von Rollformgerüsten und einem Antriebsblock mit zumindest einem Antrieb zum Antrieb von Arbeitswellen der Rollformgerüste, und mit zumindest einer Kuppelvorrichtung gemäß zumindest einer der hierin beschriebenen Ausgestaltungen, die zwischen dem Antriebsblock und zumindest einem der Rollformgerüste angeordnet ist. Die Koppelvorrichtung verbindet bedarfsweise den Antriebsblock und das zumindest eine Rollformgerüst zum Antrieb von Arbeitswellen des Rollformgerüsts. Das Einkuppeln und Auskuppeln kann automatisiert erfolgen.

Weitere Merkmale und Vorteile ergeben sich aus der nachfolgenden Beschreibung mehrerer bevorzugter Ausführungsbeispiele unter Bezugnahme auf die Zeichnungen. Es zeigen:
- Fig. 1:: eine schematische Ansicht einer modulartig aufgebauten Rollformanlage;
- Fig. 2: eine perspektivische Ansicht einer Kuppelvorrichtung, die einem Antriebsblock und einem Rollformgerüst zwischengeordnet ist;
- Fig. 3:: eine vergrößerte perspektivische Ansicht der Kuppelvorrichtung gemäß Fig. 2;
- Fig. 4:: eine weitere vergrößerte perspektivische Ansicht auf Basis der Darstellung gemäß Fig. 3 zur Veranschaulichung eines Betätigungsabschnitts der Kuppelvorrichtung;
- Fig. 5:: eine frontale Ansicht auf die Anordnung gemäß Fig. 2;
- Fig. 6:: eine Teilansicht auf die Anordnung gemäß Fig. 5 in Draufsicht;
- Fig. 7:: eine Schnittansicht entlang der Linie VII-VII in Fig. 6; und
- Fig. 8:: eine Schnittansicht entlang der Linie VIII-VIII in Fig. 6 mit entgegengesetzter Schnittrichtung im Vergleich zur Darstellung in Fig. 7.

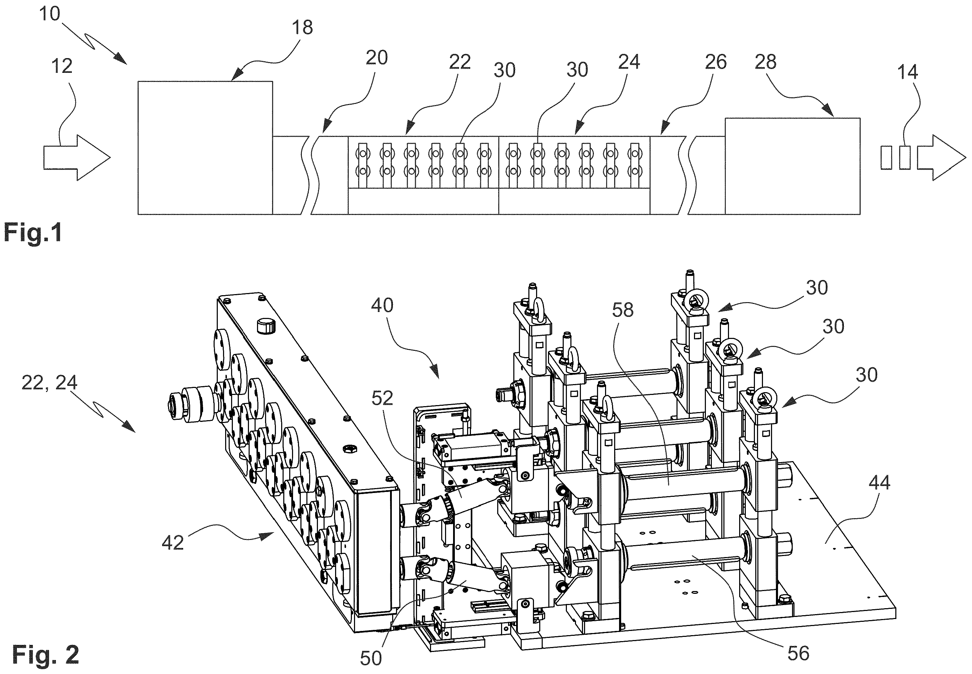

Fig. 1 veranschaulicht anhand einer vereinfachten schematischen Darstellung eine in ihrer Gesamtheit mit 10 bezeichnete Rollformanlage. Die Rollformanlage 10 dient zur Bearbeitung von Flachmaterial oder Bandmaterial. Ein Materialstrom durch die Rollformanlage 10 wird in Fig. 1 durch einen Blockfeil 12 für den Eingang und einen Blockfeil 14 für den Ausgang veranschaulicht. Üblicherweise dienen Rollformanlagen 10 zur Verarbeitung von Blechmaterial.

Die Rollformanlage 10 ist modulartig aufgebaut. Dies ist jedoch nicht einschränkend zu verstehen. Im Ausführungsbeispiel umfasst die Rollformanlage 10 ein Materialzufuhrmodul 18, das beim Eingang angeordnet ist. Von dort aus kann ein metallisches Halbzeug in Form eines Flachmaterials oder Bandmaterials zur weiteren Verarbeitung bereitgestellt werden. An das Modul 18 schließt sich ein Modul 20 an, dass im Ausführungsbeispiel als Stanzmodul gestaltet ist. Es folgen ein oder mehrere Rollformmodule 22, 24, in denen Umformprozesse stattfinden. Im Ausführungsbeispiel schließt sich ferner ein Trendmodul 26 zur Vereinzelung an, dem ein Handhabungsmodul 28 für die Handhabung der resultierenden Werkstücke folgt. Zumindest die Rollformmodule 22, 24 weisen jeweils eine Mehrzahl von Rollformgerüsten 30 auf. Es versteht sich, dass die Rollformanlage 10 in Fig. stellvertretend für eine Vielzahl von Konfigurationen gezeigt ist. Rollformanlagen 10 können rein für Umformprozesse genutzt werden. Es ist jedoch auch vorstellbar, weitere Bearbeitungsschritte zu integrieren, wie Stanzvorgänge, Schweißvorgänge, Montagevorgänge und Ähnliches.

Die vorliegende Offenbarung befasst sich mit der Gestaltung von Kuppelvorrichtungen zur Verbindung eines Antriebs mit Arbeitswellen von Rollformgerüsten 30 einer Rollformanlage 10. Fig. 2 veranschaulicht exemplarisch anhand einer perspektivischen Darstellung einen Teil eines der Rollformmodule 22, 24 der Rollformanlage 10. Eine Kuppelvorrichtung 40 ist zwischen einem Antriebsblock 42 und zumindest einem Rollformgerüst 30 verbaut. Es versteht sich, dass für jedes der in Fig. 2 gezeigten drei Rollformgerüste 30 eine separate Kuppelvorrichtung 40 vorstellbar ist. Aus Veranschaulichungsgründen ist nur eine Kuppelvorrichtung 40 gezeigt.

Die Rollformgerüste 30 sitzen auf einer gemeinsamen Basis 44. Die Kuppelvorrichtung 40 und der Antriebsblock 42 sind gestellseitig mittelbar oder unmittelbar mit der Basis 44 gekoppelt. Die Kuppelvorrichtung 40 umfasst eine erste Gelenkwelle 50 und eine zweite Gelenkwelle 52. Die erste Gelenkwelle 50 kann durch die Kuppelvorrichtung 40 mit einer ersten Arbeitswelle 56 des Rollformgerüsts 30 verbunden werden. Die zweite Gelenkwelle 52 kann durch die Kuppelvorrichtung 40 mit einer zweiten Arbeitswelle 58 des Rollformgerüsts 30 gekoppelt werden.

Die erste Gelenkwelle 50 kann auch als untere Gelenkwelle bezeichnet werden. Die zweite Gelenkwelle 52 kann auch als obere Gelenkwelle bezeichnet werden. Gleichermaßen kann die erste Arbeitswelle 56 als untere Arbeitswelle und die zweite Arbeitswelle 58 als obere Arbeitswelle bezeichnet werden. Ein jeweils unteres Element ist näher bei einer Basis oder einem Boden angeordnet als ein jeweils oberes Element. Üblicherweise sind in einem Rollformgerüst die erste Arbeitswelle 56 und die zweite Arbeitswelle 58 mit jeweils horizontaler Ausrichtung übereinander angeordnet. Dies bedingt die Grundorientierung der ersten Gelenkwelle 50 und der zweiten Gelenkwelle 52.

Der Antriebsblock 42 umfasst üblicherweise eine Mehrzahl oder Vielzahl von Antrieben für eine entsprechende Anzahl von Gelenkwellen 50, 52. Der Antriebsblock 42 kann auch als Verteilergetriebe bezeichnet werden. Üblicherweise ist ein Antriebsblock 42 derart gestaltet, dass mit nur einem Antrieb (Antriebsmotor) eine Mehrzahl oder Vielzahl von Arbeitswellen 56, 58 mehrerer Rollformgerüste 30 antreibbar sind.

Die Rollformgerüste 30 mit ihren Arbeitswellen 56, 58 können entlang der Basis 44 unterschiedlich positioniert werden. Ferner kann eine jeweilige vertikale Lage (beispielsweise Abstand von der Basis 44) zumindest einiger der Arbeitswellen 56, 58 angepasst werden. Auf diese Weise kann sich beispielsweise ein Axialversatz oder ein Radialversatz zu den Gelenkwellen 50, 52 ergeben, der durch die Kuppelvorrichtung 40 bei der Verbindung mit dem Antriebsblock 42 zu überwinden ist.

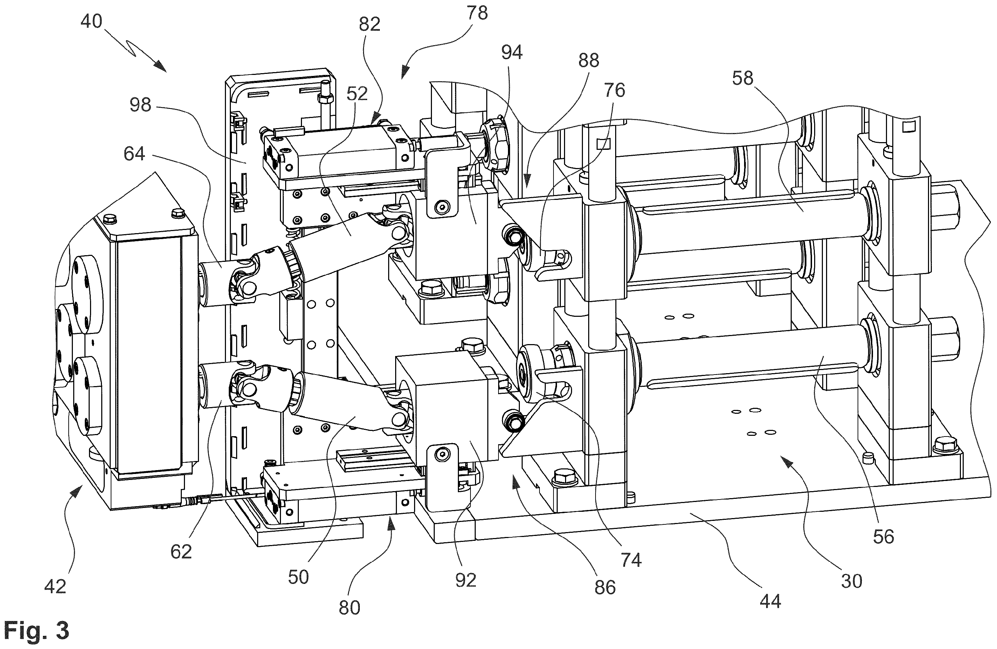

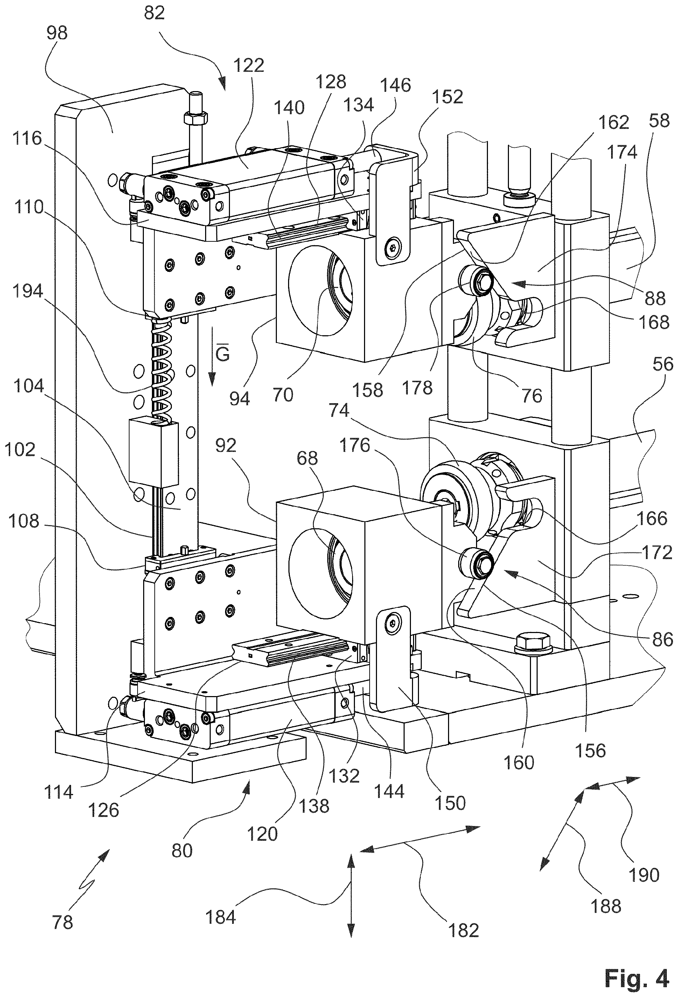

Basierend auf der Darstellung gemäß Fig. 2 zeigt Fig. 3 eine vergrößerte Detaildarstellung gleicher Orientierung. Fig. 4 veranschaulicht eine weitere perspektivische Darstellung unter Auslassung des Antriebsblocks 42 sowie teilweiser Auslassung der Gelenkwellen 50, 52.

Die erste Gelenkwelle 50 weist ein antriebsseitiges Ende 62 (Fig. 3) und ein abtriebsseitiges Ende 68 (Fig. 4) auf, das mit einem ersten Eingangsabschnitt 74 der ersten Arbeitswelle 56 koppelbar ist. Die zweite Gelenkwelle 52 weist ein antriebsseitiges Ende 64, Fig. 3) und ein abtriebsseitiges Ende 70 (Fig. 4) auf, das mit einem zweiten Eingangsabschnitt 76 der zweiten Arbeitswelle 58 koppelbar ist. Die antriebsseitigen Enden 62, 64 dienen zur Verbindung mit dem Antriebsblock 42. Die abtriebsseitigen Enden 68, 70 dienen zur Verbindung mit den Arbeitswellen 56, 58. Zwischen dem jeweiligen antriebsseitigen Ende 62, 64 und dem zugehörigen abtriebsseitigen Ende 68, 70 weisen die Gelenkwellen 50, 52 im Ausführungsbeispiel zwei Kreuzgelenke auf, zwischen denen sich ein Schubgelenk erstreckt. Auf diese Weise sind die Gelenkwellen 50, 52 grundsätzlich dazu ausgebildet, einen Axialversatz und einen Radialversatz auszugleichen. Andere Gestaltungen der Gelenkwellen 50,52 sind gleichwohl vorstellbar.

Die Kuppelvorrichtung 40 umfasst ferner eine Betätigungseinheit 78, die einen ersten Betätigungsabschnitt 80 für die erste Gelenkwelle 50 und einen zweiten Betätigungsabschnitt 82 für die zweite Gelenkwelle 52 umfasst. In den Darstellungen gemäß den Figuren 2-8 sind die Betätigungsabschnitte 80, 82 im Wesentlichen symmetrisch zu einer Horizontalebene aufgebaut. Es versteht sich, dass diese symmetrische Grundstruktur beim Betrieb der Kuppelvorrichtung 40 bzw. der Rollformanlage 10 (Fig. 1) nicht notwendigerweise aufrechterhalten werden kann, wenn die beiden Gelenkwellen 50, 52 unterschiedliche Beträge beim Axialversatz und/oder Radialversatz ausgleichen müssen. Daher ist die Bezeichnung symmetrische Gestaltung nicht einschränkend zu verstehen.

Die die Betätigungseinheit 78 umfasst für jede der beiden Gelenkwellen 50, 52 ein Koppelmechanismus 86, 88. Der ersten Gelenkwelle 50 ist ein Koppelmechanismus 86 zugeordnet. Der zweiten Gelenkwelle 52 ist ein Koppelmechanismus 88 zugeordnet. Aufgabe der Koppelmechanismen 86, 88 ist eine Bewegungsumlenkung zu Zwecken des Ausgleichs eines Versatzes zwischen den Gelenkwellen 50, 52 und den diesen zugeordneten Arbeitswellen 56, 58

Das abtriebsseitige Ende 68 der ersten Gelenkwelle 50 sitzt in einem beweglichen Lagerstück 92, vergleiche wiederum Fig. 4. Das abtriebsseitige Ende 70 der zweiten Gelenkwelle 52 sitzt in einem beweglichen Lagerstück 94. Das erste Lagerstück 92 kann über den Betätigungsabschnitt 80 verfahren werden. Das erste Lagerstück 92 ist mit dem ersten Koppelmechanismus 86 gekoppelt. Die lineare Antriebsbewegung des ersten Lagerstücks 92 wird durch den Koppelmechanismus 86 in eine umgelenkte Abtriebsbewegung gewandelt. Das zweite Lagerstück 94 kann über den Betätigungsabschnitt 82 verfahren werden. Das zweite Lagerstück 94 ist mit dem zweiten Koppelmechanismus 88 gekoppelt. Die lineare Antriebsbewegung des zweiten Lagerstücks 94 wird durch den Koppelmechanismus 88 in eine umgelenkte Abtriebsbewegung gewandelt.

Fig. 4 veranschaulicht bei weitgehend ausgeblendeten Gelenkwellen 50, 52 einen Ständer 98, der im Ausführungsbeispiel Komponenten des ersten Betätigungsabschnitts 80 und des zweiten Betätigungsabschnitts 82 der Betätigungseinheit 78 trägt. Am Ständer 98 ist ferner eine erste Führung 102 angeordnet, die im Ausführungsbeispiel eine vertikal orientierte erste Schiene 104 umfasst. Die Führung 102 mit der Schiene 104 ist gemeinsam dem ersten Betätigungsabschnitt 80 und dem zweiten Betätigungsabschnitt 82 zugeordnet.

Beim ersten Betätigungsabschnitt 80 sitzt ein (erster) erster Schlitten 108 auf der ersten Schiene 104. Beim zweiten Betätigungsabschnitt 82 sitzt ein (zweiter) erster Schlitten 110 auf der ersten Schiene 104. Am Schlitten 108 ist ein Träger 114 angeordnet, der einen Aktuator 120 zum Verfahren des ersten Lagerstücks 92 trägt. Am Schlitten 110 ist ein Träger 116 angeordnet, der einen Aktuator 122 zum Verfahren des zweiten Lagerstücks 94 trägt.

Der Träger 114 trägt ferner eine (erste) zweite Führung 126, die im Ausführungsbeispiel einen am Träger 114 festgelegten Schlitten 132 sowie eine entlang des Schlittens 132 verfahrbare Schiene 138 umfasst. Der Träger 116 trägt ferner eine (zweite) zweite Führung 128, die im Ausführungsbeispiel einen am Träger 116 festgelegten Schlitten 134 sowie eine entlang des Schlittens 134 verfahrbare Schiene 140 umfasst. An der (ersten) zweiten Schiene 138 ist das erste Lagerstück 92 montiert. An der (zweiten) zweiten Schiene 140 ist das zweite Lagerstück 94 montiert. Der erste Aktuator 120 umfasst eine ausfahrbare Stange 144, die auf einen Mitnehmer 150 einwirkt, der am ersten Lagerstück 92 festgelegt ist. Der zweite Aktuator 122 umfasst eine ausfahrbare Stange 146, die auf einen Mitnehmer 152 einwirkt, der am zweiten Lagerstücks 94 festgelegt ist.

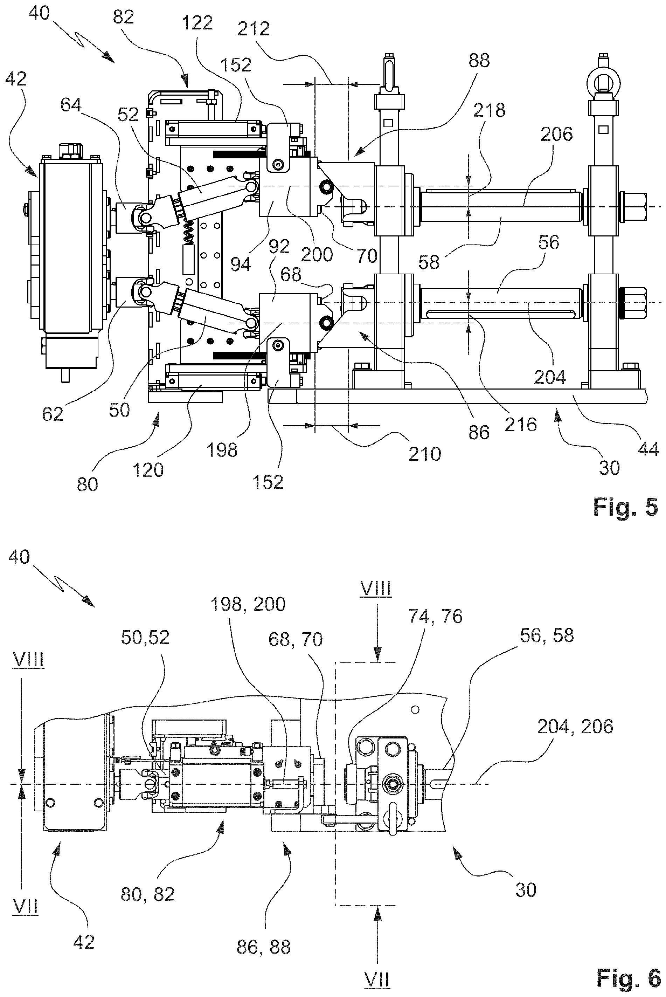

Das erste Lagerstück 92 ist mit dem ersten Koppelmechanismus 86 gekoppelt (vergleiche auch Fig. 5). Der erste Koppelmechanismus 86 umfasst eine Führungskulisse 156, die einen geneigten Abschnitt 160 und einen parallelen Abschnitt 166 umfasst. Der geneigte Abschnitt 160 ist gegenüber einer Längsachse durch das antriebsseitige Ende 68 und/oder durch die erste Arbeitswelle 56 geneigt. Der parallele Abschnitt 166 ist parallel oder im Wesentlichen parallel zur Längsachse durch das antriebsseitige Ende 68 und/oder durch die erste Arbeitswelle 56 orientiert. Die Führungskulisse 156 ist an einer Konsole 172 ausgebildet, die dem Eingangsabschnitt 74 der ersten Arbeitswelle 56 mit definierter Orientierung zugeordnet und benachbart ist. Das erste Lagerstück 92 fährt mit einer Führungsrolle 176 entlang der Führungskulisse 156.

Das zweite Lagerstück 94 ist mit dem zweiten Koppelmechanismus 88 gekoppelt. Der zweite Koppelmechanismus 88 umfasst eine zweite Führungskulisse 158, die einen geneigten Abschnitt 162 und einen parallelen Abschnitt 168 umfasst. Der geneigte Abschnitt 162 ist gegenüber einer Längsachse durch das antriebsseitige Ende 70 und/oder durch die zweite Arbeitswelle 58 geneigt. Der parallele Abschnitt 168 ist parallel oder im Wesentlichen parallel zur Längsachse durch das antriebsseitige Ende 70 und/oder durch die zweite Arbeitswelle 58 orientiert. Die Führungskulisse 158 ist an einer Konsole 174 ausgebildet, die dem Eingangsabschnitt 76 der zweiten Arbeitswelle 58 mit definierter Orientierung zugeordnet und benachbart ist. Das zweite Lagerstück 94 fährt mit einer Führungsrolle 178 entlang der Führungskulisse 158.

Zur Veranschaulichung der Bewegungen beim Zusammenwirken zwischen den Lagerstücken 92, 94 und den Führungskulissen 156, 158 wird Bezug genommen auf den (unteren) ersten Betätigungsabschnitt 80 mit dem ersten Lagerstück 92 und der ersten Führungskulisse 156. Beim Ausfahren der Stange 144 des am ersten Träger 114 festgelegten ersten Aktuators 120 wird das Lagerstück 92 und das darin aufgenommene antriebsseitige Ende 68 der ersten Gelenkwelle 50 entlang der (ersten) zweiten Führung 126 linear verfahren. Diese Bewegung ist im Ausführungsbeispiel eine horizontale Linearbewegung, vergleiche den Doppelpfeil 182 in Fig. 4.

Die Antriebsbewegung drängt das Lagerstück 92 mit seiner Führungsrolle 176 entlang der Führungskulisse 156. Dies umfasst zunächst eine Bewegung entlang des geneigten Abschnitts 160, vergleiche den Doppelpfeil 188 in Fig. 4. Beim Übergang in den parallelen Abschnitt 166 ändert sich die Orientierung der Bewegung, vergleiche den Doppelpfeil 190 in Fig. 4. Entlang des geneigten Abschnitts 160 kann ein Radialversatz zwischen dem abtriebsseitigen Ende 68 und dem Eingangsabschnitt 74 ausgeglichen werden. Entlang des parallelen Abschnitts 166 und zumindest teilweise entlang des geneigten Abschnitts 160 kann ein Axialversatz zwischen dem abtriebsseitigen Ende 68 und dem Eingangsabschnitt 74 ausgeglichen werden. Ferner erleichtert der parallele Abschnitt 166 das finale Einrücken (und bedarfsweise das Ausrücken) zwischen dem abtriebsseitigen Ende 68 und dem Eingangsabschnitt 74.

Die Bewegung des Lagerstücks 92 entlang des geneigten Abschnitts 160 hat eine vertikale Komponente und eine horizontale Komponente, vergleiche wiederum den Doppelpfeil 188. Die ursprüngliche Antriebsbewegung durch das Ausfahren der Stange 144 des Aktuators 120 erfolgt horizontal entlang der zweiten Führung 120 (vergleiche den Doppelpfeil 182). Da jedoch das Lagerstück 92 auch vertikal verfahren wird, erfolgt ein Ausgleich über die Bewegung des ersten Trägers 114 entlang der ersten Führung 102, vergleiche den vertikal orientierten Doppelpfeil 184 in Fig. 4. Dabei kann der Betrag der Bewegung entlang der ersten Führung 102 (Doppelpfeil 184) dem Betrag des ausgeglichenen Radialversatzes entsprechen. Ferner kann der Betrag der Bewegung entlang der zweiten Führung 126 (Doppelpfeil 182) dem Betrag des ausgeglichenen Axialversatzes entsprechen.

Bei der Bewegung des zweiten Lagerstücks 94 in Bezug auf die zweite Führungskulisse 158 zur Kupplung der zweiten Gelenkwelle 52 mit der zweiten Arbeitswelle 58 verhält es sich gleichermaßen.

Fig. 4 zeigt ferner ein Vorspannelement 194, das sich am Ständer 98 abstützt und den am (zweiten) ersten Schlitten 110 angeordneten Träger 116 in Richtung auf eine Ruheposition drängt, in der gezeigten Orientierung nach oben. Auf diese Weise kann eine nach unten gerichtete Gewichtskraft G durch Komponenten des zweiten Betätigungsabschnitts 82, die der Träger 116 trägt, sowie durch den Träger 116 selbst kompensiert werden. In Fig. 4 sind der erste Betätigungsabschnitt 80 und der zweite Betätigungsabschnitt 82 jeweils in einer Ruhestellung gezeigt. Beim ersten Betätigungsabschnitt 80 umfasst dies eine Anlage an einem unteren Anschlag für den (ersten) ersten Schlitten 108, der den Träger 114 trägt. Beim zweiten Betätigungsabschnitt 82 umfasst dies eine Anlage an einem oberen Anschlag für den (zweiten) ersten Schlitten 110, der den Träger 116 trägt.

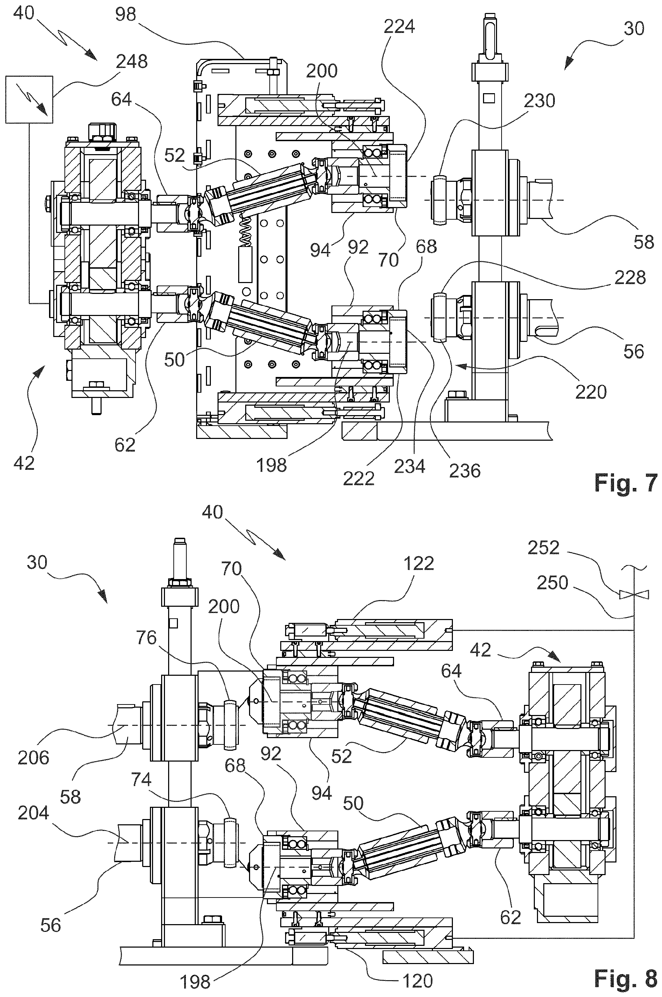

Mit Bezug auf die Figuren 5-8 werden weitere beispielhafte Gestaltmerkmale der Kuppelvorrichtung 40 näher veranschaulicht. Fig. 4 zeigt eine frontale Ansicht auf eine Anordnung aus Rollformgerüst 30, Kuppelvorrichtung 40 und Antriebsblock 42. Fig. 6 zeigt eine zugehörige Draufsicht. Fig. 7 zeigt eine Schnittansicht in frontale Orientierung, wobei der Schnittverlauf der Linie VII-VII in Fig. 6 entspricht. Fig. 8 zeigt eine Schnittansicht in gegenüber der Fig. 7 umgekehrter Orientierung, wobei der Schnittverlauf der Linie VIII-VIII in Fig. 6 entspricht.

Fig. 5 zeigt die grundsätzlich schon anhand der Figuren 2-4 veranschaulichte Ausgestaltung der Kuppelvorrichtung 40 zur Verbindung des Antriebsblocks 42 mit Arbeitswellen 56, 58 des Rollformgerüsts 30 über Gelenkwellen 50, 52. In Fig. 5 sind ferner Längsachsen 198, 200 durch ein jeweiliges abtriebsseitiges Ende 68, 70 der Gelenkwellen 50, 52 sowie Längsachsen 204, 206 der Arbeitswellen 56, 58 gezeigt.

Die einander zugewandten abtriebsseitigen Enden 68, 70 und Eingangsabschnitte der 74, 76 weisen bei der Orientierung in Fig. 5 jeweils ein Axialversatz 210, 212 auf, der von der Kuppelvorrichtung 40 zu überbrücken ist. Ferner liegt zwischen den Längsachsen 198 und 204 sowie den Längsachsen 200 und 206 jeweils ein Radialversatz 216, 218 vor, der ebenfalls durch die Kuppelvorrichtung 40 zu überbrücken ist. Die zuvor beschriebene Ausgestaltung der Betätigungseinheit 78 mit den Betätigungsabschnitten 80, 82 befähigt die Kupplungsvorrichtung 40 dazu, mit nur jeweils einem Aktuator 120, 122 bei den einzelnen Betätigungsabschnitten 80, 82 eine erforderliche Ausgleichsbewegung in mehreren Richtungen herbeizuführen.

Fig. 6 veranschaulicht anhand einer Teilansicht (Draufsicht) auf die Kuppelvorrichtung 40, dass im Ausführungsbeispiel die Gelenkwellen 50, 52 und die Arbeitswellen 56, 58 jeweils übereinander angeordnet sind, wobei die zugehörigen Längsachsen 198, 200 sowie 204, 206 in einer gemeinsamen vertikal orientierten Ebene (in Fig. 6 senkrecht zur Ansichtsebene) angeordnet sind. Dies ist nicht einschränkend zu verstehen. Fig. 6 veranschaulicht ferner die Schnittverläufe VII-VII sowie VIII-VIII in den nachfolgenden Figuren 7 und 8.

In Fig. 7 und Fig. 8 ist jeweils ein Schnitt durch die Achsen 198, 200 sowie 204, 206 gezeigt. Zwischen den abtriebsseitigen Enden 68, 70 der Gelenkwellen 50, 52 und den diesen zugewandten Eingangsabschnitten 74, 76 der Arbeitswellen 56, 58 bildet sich jeweils eine Kupplung aus. Die abtriebsseitigen Enden 68, 70 bilden jeweils ein Kupplungsteil 222, 224 und die Eingangsabschnitte 74, 76 bilden jeweils ein Kupplungsteil 228, 230, die miteinander kombinierbar sind.

In Fig. 7 ist eine Gestaltung als Bogenzahnkupplung 220 angedeutet, die durch die Kupplungsteile 222 und 228 gebildet wird. Die Bogenzahnkupplung 220 umfasst beim Kupplungsteil 222 im Ausführungsbeispiel eine als Innenverzahnung gestaltete Bogenverzahnung 234 und beim Kupplungsteil 228 eine als Außenverzahnung gestaltete Bogenverzahnung 236. Die Bogenverzahnungen 234, 236 können ineinander einrücken. Die Bogenzahnkupplung 220 ist relativ unempfindlich für (kleinere) Abweichung bei Lage und Orientierung, so dass das automatisierte Einrücken und Ausrücken durch die Kuppelvorrichtung 40 unterstützt wird. Es versteht sich, dass bei der in Fig. 7 gezeigten Ausgestaltung jede der beiden Gelenkwellen 50, 52 über eine Bogenzahnkupplung 220 mit der zugehörigen Arbeitswelle 56, 58 verbindbar ist.

In einer beispielhaften Ausgestaltung ist vorgesehen, die Kupplungsteile 222, 224 bei den Gelenkwellen 50, 52 während des Kuppelvorgangs drehoszillierend anzutreiben. Auf diese Weise können sich Zähne und Lücken der beteiligten Kupplungsteile 222 und 228 sowie 224 und 230 einfach finden. Zur Erzeugung der Drehoszillationsbewegung wird eine mit 248 bezeichnete Antriebssteuerung genutzt, die entsprechend auf den Antriebsblock 42 bzw. dessen Antrieb einwirkt.

Fig. 8 veranschaulicht ergänzend, dass in einer beispielhaften Ausgestaltung beide Aktuatoren 120, 122 gemeinsam über eine gemeinsame Anschlussleitung 250 ansteuerbar sind. Mit anderen Worten sind die beiden Aktuatoren 120, 122 in dieser Ausgestaltung steuerungstechnisch synchronisiert. Der Kuppelvorgang der beiden Gelenkwellen 50, 52 mit den Arbeitswellen 56, 58 erfolgt zeitparallel. Eine Steuerung (in Fig. 8 mit 252 angedeutet) wirkt über die gemeinsame Anschlussleitung 250 zwingend auf beide Aktuatoren 120, 122 ein.

Wie vorstehend bereits dargelegt, es ist grundsätzlich auch vorstellbar, lediglich einen einzigen Aktuator zur Bewegung beider Lagerstücke 92, 94 zu nutzen. Gegebenenfalls wären dann Relativbewegungen zwischen den beiden Lagerstücken 92, 94 (üblicherweise in der Vertikalen) über geeignete Führungen auszugleichen.

Es ist grundsätzlich auch vorstellbar, abweichend von der grundsätzlich "symmetrischen" Gestaltung der beiden Betätigungsabschnitte 80, 82 der Betätigungseinheit 84 eine gleichartige, aber versetzte Gestaltung zu wählen. Bei einer solchen Anordnung wäre keine strukturelle Symmetrie bei den Betätigungsabschnitten 80, 82 gegeben. Anders gesagt könnte man bei diesem Ansatz einen der beiden Betätigungsabschnitte 80, 82 duplizieren und vertikal zum anderen Betätigungsabschnitt versetzen. Auch eine solche Gestaltung mit einem "Muster" aus zwei identischen oder weitgehend identischen Betätigungsabschnitten 80, 82 kann grundsätzlich mit zwei Aktuatoren 120, 122 umgesetzt werden, von denen jeweils einer einem der Betätigungsabschnitte 80, 82 zugeordnet ist. Es ist jedoch auch vorstellbar, dann lediglich einen Aktuator für beide Betätigungsabschnitte 80, 82 vorzusehen.

## Patentansprüche

1. Kuppelvorrichtung (40) zur Verbindung eines Antriebsblocks (42) mit zumindest einer Arbeitswelle (56, 58) eines Rollformgerüsts (30), die Folgendes aufweist:
- zumindest eine Gelenkwelle (50, 52) mit einem antriebsseitigen Ende (62, 64) und einem abtriebsseitigen Ende (68, 70),
wobei das abtriebsseitige Ende (68, 70) mit einem Eingangsabschnitt (74, 76) einer Arbeitswelle (56, 58) des Rollformgerüsts (30) verbindbar ist,
- eine automatisierte Betätigungseinheit (78) zum Einrücken und Ausrücken der Gelenkwelle (50, 52),
**dadurch gekennzeichnet, dass**
die Betätigungseinheit (78) einen Koppelmechanismus (86, 88) mit einer Führungskulisse (156, 158) aufweist, der zumindest beim Einrücken der Gelenkwelle (50, 52) einen Axialversatz (210, 212) und einen Radialversatz (216, 218) zwischen dem abtriebsseitigen Ende (68, 70) der Gelenkwelle (50, 52) und dem Eingangsabschnitt (74, 76) der Arbeitswelle (56, 58) ausgleicht, wobei die Führungskulisse (156, 158) einen sowohl gegenüber einer Richtung des Axialversatzes (210, 212) als auch gegenüber einer Richtung des Parallelversatzes (216, 218) geneigten Abschnitt (160, 162) aufweist,
wobei das abtriebsseitige Ende (68, 70) und der Eingangsabschnitt (74, 76) entlang des geneigten Abschnitts (160, 162) relativ zueinander verfahrbar sind, um die Gelenkwelle (50, 52) mit der Arbeitswelle (56, 58) zu koppeln.

2. Kuppelvorrichtung (40) nach Anspruch 1, **dadurch gekennzeichnet, dass** zum Einrücken und Ausrücken der Gelenkwelle (50, 52) mit der Arbeitswelle (56, 58) lediglich ein einziger Aktuator (120, 122) erforderlich ist.

3. Kuppelvorrichtung (40) nach Anspruch 1, **dadurch gekennzeichnet, dass** die Führungskulisse (156, 158) zumindest beim Einrücken der Gelenkwelle (50, 52) eine Zwangsführung bei der Relativbewegung zwischen dem abtriebsseitigen Ende (68, 70) der Gelenkwelle (50, 52) und dem Eingangsabschnitt (74, 76) der Arbeitswelle (56, 58) bewerkstelligt.

4. Kuppelvorrichtung (40) nach einem der Ansprüche 1-3, **dadurch gekennzeichnet, dass** die Führungskulisse (156, 158) im Anschluss an den geneigten Abschnitt (160, 162) einen sich zu einer Längsachse (204, 206) der Arbeitswelle (56, 58) parallel erstreckenden Abschnitt (166, 168) aufweist.

5. Kuppelvorrichtung (40) nach einem der Ansprüche 1-4, **dadurch gekennzeichnet, dass** die Führungskulisse (156, 158) benachbart zum Eingangsabschnitt (74, 76) der Arbeitswelle (56, 58) beim Rollformgerüst (30) angeordnet ist.

6. Kuppelvorrichtung (40) nach einem der Ansprüche 1-5, **dadurch gekennzeichnet, dass** der Koppelmechanismus (86, 88) zumindest eine entlang der Führungskulisse (156, 158) verfahrbare Führungsrolle (176, 178) aufweist, die gemeinsam mit dem abtriebsseitigen Ende (68, 70) der Gelenkwelle (50, 52) verfahrbar ist.

7. Kuppelvorrichtung (40) nach einem der Ansprüche 1-6, **dadurch gekennzeichnet, dass** der Koppelmechanismus (86, 88) ein verfahrbares Lagerstück (92, 94) aufweist, das beim abtriebsseitigen Ende (68, 70) der Gelenkwelle (50, 52) angeordnet ist und zumindest beim Einrücken der Gelenkwelle (50, 52) mit der Führungskulisse (156, 158) zusammenwirkt, und dass das verfahrbare Lagerstück (92, 94) insbesondere eine Führungsrolle (176, 178) oder einen Führungsbolzen trägt.

8. Kuppelvorrichtung (40) nach Anspruch 7, **dadurch gekennzeichnet, dass** der Koppelmechanismus (86, 88) eine erste Führung (102) und eine schräg zur ersten Führung (102) orientierte zweite Führung (126, 128) aufweist, dass die zweite Führung (126, 128) verschieblich an der ersten Führung (102) gehalten ist, und dass das Lagerstück (92, 94) entlang der zweiten Führung (126, 128) verschieblich ist.

9. Kuppelvorrichtung (40) nach Anspruch 8, **dadurch gekennzeichnet, dass** zumindest die zweite Führung (126, 128) mit einem Vorspannelement (194) gekoppelt ist, das die zweite Führung (126, 128) in eine Ruhelage drängt.

10. Kuppelvorrichtung (40) nach Anspruch 8 oder 9, **dadurch gekennzeichnet, dass** die Betätigungseinheit (78) einen gemeinsamen Aktuator (120, 122) für die Bewegung entlang der ersten Führung (102) und entlang der zweiten Führung (126, 128) aufweist.

11. Kuppelvorrichtung (40) nach einem der Ansprüche 1-10, **gekennzeichnet durch** eine erste Gelenkwelle (50) mit einem antriebsseitigen Ende (62) und einem abtriebsseitigen Ende (68), wobei das abtriebsseitige Ende (68) mit einer ersten Arbeitswelle (56) der Rollformgerüsts (30) verbindbar ist, und
eine zweite Gelenkwelle (52) mit einem antriebsseitigen Ende (64) und einem abtriebsseitigen Ende (70), wobei das abtriebsseitige Ende (70) mit einer zweiten Arbeitswelle (58) der Rollformgerüsts (30) verbindbar ist,
wobei die Betätigungseinheit (78) einen ersten Betätigungsabschnitt (80) zum Einrücken und Ausrücken der ersten Gelenkwelle (50) und einen zweiten Betätigungsabschnitt (82) zum Einrücken und Ausrücken der zweiten Gelenkwelle (52) aufweist, und
wobei der erste Betätigungsabschnitt (80) und der zweite Betätigungsabschnitt (82) jeweils einen Koppelmechanismus (86, 88) aufweisen, der zumindest beim Einrücken der Gelenkwellen (50, 52) einen Axialversatz (210, 212) und einen Radialversatz (216, 218) zwischen dem abtriebsseitigen Ende (68, 70) der Gelenkwellen (50, 52) und dem Eingangsabschnitt (74, 76) der Arbeitswellen (56, 58) ausgleicht.

12. Kuppelvorrichtung (40) nach Anspruch 11, **dadurch gekennzeichnet, dass** der erste Betätigungsabschnitt (80) und der zweite Betätigungsabschnitt (82) einen gemeinsamen Aktuator (120, 122) zum Einrücken und/oder Ausrücken der ersten Gelenkwelle (56) und der zweiten Gelenkwelle (58) aufweisen, oder
dass der erste Betätigungsabschnitt (80) einen ersten Aktuator (120) zum Einrücken und/oder Ausrücken der ersten Gelenkwelle (56) und der zweite Betätigungsabschnitt (82) einen zweiten Aktuator (122) zum Einrücken und/oder Ausrücken der zweiten Gelenkwelle (58) aufweist.

13. Kuppelvorrichtung (40) nach einem der Ansprüche 1-12, **dadurch gekennzeichnet, dass** das abtriebsseitige Ende (68, 70) der zumindest einen Gelenkwelle (56, 58) über eine Bogenzahnkupplung (220) mit dem Eingangsabschnitt (74, 76) der Arbeitswelle (56, 58) verbindbar ist.

14. Kuppelvorrichtung (40) nach Anspruch 13, **dadurch gekennzeichnet, dass** die Bogenzahnkupplung (220) einen ersten Kupplungsteil (222) mit einer als Innenverzahnung gestalteten Bogenverzahnung (234) und einen zweiten Kupplungsteil (228) mit einer als Außenverzahnung gestalteten Bogenverzahnung (236) aufweist, und dass vorzugsweise die zumindest eine Gelenkwelle (50, 52) in einem Einrückmodus drehoszillierend antreibbar ist, um das Einrücken zwischen dem ersten Kupplungsteil (222) und dem zweiten Kupplungsteil (228) zu vereinfachen.

15. Rollformanlage (10) mit einer Mehrzahl von Rollformgerüsten (30) und einem Antriebsblock (42) zum Antrieb von Arbeitswellen (56, 58) der Rollformgerüste (30), **gekennzeichnet durch** zumindest eine Kuppelvorrichtung (40) nach einem der Ansprüche 1-14, die zwischen dem Antriebsblock (42) und zumindest einem der Rollformgerüste (30) angeordnet ist.

## Claims

1. A coupling device (40) for connecting a drive block (42) to at least one working shaft (56, 58) of a roll forming stand (30), comprising:
- at least one universal shaft (50, 52) having a drive-side end (62, 64) and a driven-side end (68, 70),
wherein the driven-side end (68, 70) is connectable to an input section (74, 76) of a working shaft (56, 58) of the roll forming stand (30),
- an automated actuating unit (78) for engaging and disengaging the universal shaft (50, 52),
**characterized in that**
the actuating unit (78) comprises a coupling mechanism (86, 88) with a guide link (156, 158) which compensates for an axial offset (210, 212) and a radial offset (216, 218) between the driven-side end (68, 70) of the universal shaft (50, 52) and the input section (74, 76) of the working shaft (56, 58), at least when the universal shaft (50, 52) is engaging, wherein the guide link (156, 158) has a section (160, 162) which is inclined both with respect to a direction of the axial offset (210, 212) and with respect to a direction of the parallel offset (216, 218),
wherein the driven-side end (68, 70) and the input section (74, 76) are movable relative to one another along the inclined portion (160, 162) in order to couple the universal shaft (50, 52) to the working shaft (56, 58).

2. The coupling device (40) of claim 1, **characterized in that** for engaging and disengaging the universal shaft (50, 52) with the working shaft (56, 58), only a single actuator (120, 122) is required.

3. The coupling device (40) of claim 1, **characterized in that** the guide link (156, 158) provides a forced guidance during the relative movement between the driven-side end (68, 70) of the universal shaft (50, 52) and the input section (74, 76) of the working shaft (56, 58), at least when the universal shaft (50, 52) is engaging.

4. The coupling device (40) of any of claims 1-3, **characterized in that** the guide link (156, 158) has, following the inclined section (160, 162), a section (166, 168) extending parallel to a longitudinal axis (204, 206) of the working shaft (56, 58).

5. The coupling device (40) of any of claims 1-4, **characterized in that** the guide link (156, 158) is arranged adjacent to the input section (74, 76) of the working shaft (56, 58) at the roll forming stand (30).

6. The coupling device (40) of any of claims 1-5, **characterized in that** the coupling mechanism (86, 88) has at least one guide roller (176, 178) which can be moved along the guide link (156, 158) and can be moved together with the driven-side end (68, 70) of the universal shaft (50, 52).

7. The coupling device (40) of any of claims 1-6, **characterized in that** the coupling mechanism (86, 88) has a movable bearing piece (92, 94) which is arranged at the driven-side end (68, 70) of the universal shaft (50, 52) and interacts with the guide link (156, 158), at least when the universal shaft (50, 52) is engaging, and that the movable bearing piece (92, 94) carries in particular a guide roller (176, 178) or a guide bolt.

8. The coupling device (40) of claim 7, **characterized in that** the coupling mechanism (86, 88) has a first guide (102) and a second guide (126, 128) oriented obliquely to the first guide (102), that the second guide (126, 128) is movably supported on the first guide (102), and that the bearing piece (92, 94) is displaceable along the second guide (126, 128).

9. The coupling device (40) of claim 8, **characterized in** at least the second guide (126, 128) is coupled to a biasing element (194) that urges the second guide (126, 128) to a rest position.

10. The coupling device (40) according to claim 8 or 9, **characterized in that** the actuating unit (78) has a common actuator (120, 122) for movement along the first guide (102) and along the second guide (126, 128).

11. The coupling device (40) of any of claims 1-10, **characterized by** a first universal shaft (50) having a drive-side end (62) and a driven-side end (68), the driven-side end (68) being connectable to a first working shaft (56) of the roll forming stand (30), and
a second universal shaft (52) having a drive-side (64) and a driven-side end (70), the driven-side end (70) being connectable to a second working shaft (58) of the roll forming stand (30),
wherein the actuating unit (78) has a first actuating section (80) for engaging and disengaging the first universal shaft (50) and a second actuating section (82) for engaging and disengaging the second universal shaft (52), and
wherein the first actuating section (80) and the second actuating section (82) each have a coupling mechanism (86, 88) which compensates for an axial offset (210, 212) and a radial offset (216, 218) between the driven-side end (68, 70) of the universal shafts (50, 52) and the input section (74, 76) of the working shafts (56, 58), at least when the universal shafts (50, 52) are engaging.

12. The coupling device (40) of claim 11, **characterized in that**
the first actuating section (80) and the second actuating section (82) have a common actuator (120, 122) for engaging and/or disengaging the first universal shaft (56) and the second universal shaft (58), or
the first actuating section (80) has a first actuator (120) for engaging and/or disengaging the first universal shaft (56), and the second actuating section (82) has a second actuator (122) for engaging and/or disengaging the second universal shaft (58).

13. The coupling device (40) of any of claims 1-12, **characterized in that** the driven-side end (68, 70) of the at least one universal shaft (56, 58) can be connected to the input section (74, 76) of the working shaft (56, 58) via an arcuate toothed coupling (220).

14. The coupling device (40) of claim 13, **characterized in that** the arcuate toothed coupling (220) has a first coupling part (222) with an arcuate toothing (234) configured as an inner toothing and a second coupling part (228) with an arcuate toothing (236) configured as an outer toothing, and that preferably the at least one universal shaft (50, 52) can be driven in a rotationally oscillating manner in an engagement mode in order to simplify the engagement between the first coupling part (222) and the second coupling part (228).

15. Roll forming line (10) having a plurality of roll forming stands (30) and a drive block (42) for driving working shafts (56, 58) of the roll forming stands (30), **characterized by** at least one coupling device (40) according to any of claims 1-14 that is arranged between the drive block (42) and at least one of the roll forming stands (30).

## Revendications

1. Dispositif d'accouplement (40) permettant de relier un bloc d'entraînement (42) à au moins un arbre de travail (56, 58) d'une structure de profilage par roulage (30), présentant les éléments suivants :
- au moins un arbre de transmission (50, 52) comportant une extrémité côté entraînement (62, 64) et une extrémité côté sortie (68, 70),
dans lequel l'extrémité côté sortie (68, 70) peut être reliée à une section d'entrée (74, 76) d'un arbre de travail (56, 58) de la structure de profilage par roulage (30),
- une unité d'actionnement (78) automatisée permettant d'embrayer et de débrayer l'arbre de transmission (50, 52),
**caractérisé en ce que**
l'unité d'actionnement (78) présente un mécanisme d'accouplement (86, 88) comportant une coulisse de guidage (156, 158) qui, au moins lors de l'embrayage de l'arbre de transmission (50, 52), compense un décalage axial (210, 212) et un décalage radial (216, 218) entre l'extrémité côté sortie (68, 70) de l'arbre de transmission (50, 52) et la section d'entrée (74, 76) de l'arbre de travail (56, 58), dans lequel la coulisse de guidage (156, 158) présente une section (160, 162) inclinée à la fois par rapport à une direction du décalage axial (210, 212) et par rapport à une direction du décalage parallèle (216, 218),
dans lequel l'extrémité côté sortie (68, 70) et la section d'entrée (74, 76) sont mobiles l'une par rapport à l'autre le long de la section inclinée (160, 162) pour accoupler l'arbre de transmission (50, 52) à l'arbre de travail (56, 58).

2. Dispositif d'accouplement (40) selon la revendication 1, **caractérisé en ce qu'**un seul actionneur (120, 122) est nécessaire pour embrayer l'arbre de transmission (50, 52) avec l'arbre de travail (56, 58) et le débrayer de celui-ci.

3. Dispositif d'accouplement (40) selon la revendication 1, **caractérisé en ce que** la coulisse de guidage (156, 158) réalise, au moins lors de l'embrayage de l'arbre de transmission (50, 52), un guidage forcé lors du mouvement relatif entre l'extrémité côté sortie (68, 70) de l'arbre de transmission (50, 52) et la section d'entrée (74, 76) de l'arbre de travail (56, 58).

4. Dispositif d'accouplement (40) selon l'une des revendications 1 à 3, **caractérisé en ce que** la coulisse de guidage (156, 158) présente, à la suite de la section inclinée (160, 162), une section (166, 168) s'étendant parallèlement à un axe longitudinal (204, 206) de l'arbre de travail (56, 58).

5. Dispositif d'accouplement (40) selon l'une des revendications 1 à 4, **caractérisé en ce que** la coulisse de guidage (156, 158) est disposée de manière à être adjacente à la section d'entrée (74, 76) de l'arbre de travail (56, 58) dans la structure de profilage par roulage (30).

6. Dispositif d'accouplement (40) selon l'une des revendications 1 à 5, **caractérisé en ce que** le mécanisme d'accouplement (86, 88) présente au moins un galet de guidage (176, 178) mobile le long de la coulisse de guidage (156, 158) et mobile conjointement avec l'extrémité côté sortie (68, 70) de l'arbre de transmission (50, 52).

7. Dispositif d'accouplement (40) selon l'une des revendications 1 à 6, **caractérisé en ce que** le mécanisme d'accouplement (86, 88) présente une pièce formant palier (92, 94) mobile qui est disposée à l'extrémité côté sortie (68, 70) de l'arbre de transmission (50, 52) et qui coopère avec la coulisse de guidage (156, 158) au moins lors de l'embrayage de l'arbre de transmission (50, 52), et **en ce que** la pièce formant palier (92, 94) mobile supporte en particulier un galet de guidage (176, 178) ou un axe de guidage.

8. Dispositif d'accouplement (40) selon la revendication 7, **caractérisé en ce que** le mécanisme d'accouplement (86, 88) présente un premier guide (102) et un second guide (126, 128) orienté obliquement par rapport au premier guide (102), **en ce que** le second guide (126, 128) est maintenu de manière à pouvoir coulisser sur le premier guide (102), et **en ce que** la pièce formant palier (92, 94) peut coulisser le long du second guide (126, 128).

9. Dispositif d'accouplement (40) selon la revendication 8, **caractérisé en ce qu'**au moins le second guide (126, 128) est accouplé à un élément de précontrainte (194) qui presse le second guide (126, 128) dans une position de repos.

10. Dispositif d'accouplement (40) selon la revendication 8 ou 9, **caractérisé en ce que** l'unité d'actionnement (78) présente un actionneur (120, 122) commun pour le mouvement le long du premier guide (102) et le long du second guide (126, 128).

11. Dispositif d'accouplement (40) selon l'une des revendications 1 à 10,
**caractérisé par** un premier arbre de transmission (50) comportant une extrémité côté entraînement (62) et une extrémité côté sortie (68), dans lequel l'extrémité côté sortie (68) peut être reliée à un premier arbre de travail (56) de la structure de profilage par roulage (30), et
un second arbre de transmission (52) comportant une extrémité côté entraînement (64) et une extrémité côté sortie (70), dans lequel l'extrémité côté sortie (70) peut être reliée à un second arbre de travail (58) de la structure de profilage par roulage (30),
dans lequel l'unité d'actionnement (78) présente une première section d'actionnement (80) permettant d'embrayer et de débrayer le premier arbre de transmission (50) et une seconde section d'actionnement (82) permettant d'embrayer et de débrayer le second arbre de transmission (52), et
dans lequel la première section d'actionnement (80) et la seconde section d'actionnement (82) présentent respectivement un mécanisme d'accouplement (86, 88) qui, au moins lors de l'embrayage des arbres de transmission (50, 52), compense un décalage axial (210, 212) et un décalage radial (216, 218) entre l'extrémité côté sortie (68, 70) des arbres de transmission (50, 52) et la section d'entrée (74, 76) des arbres de travail (56, 58).

12. Dispositif d'accouplement (40) selon la revendication 11, **caractérisé en ce que** la première section d'actionnement (80) et la seconde section d'actionnement (82) présentent un actionneur (120, 122) commun permettant d'embrayer et de débrayer le premier arbre de transmission (56) et le second arbre de transmission (58), ou
**en ce que** la première section d'actionnement (80) présente un premier actionneur (120) permettant d'embrayer et/ou de débrayer le premier arbre de transmission (56) et la seconde section d'actionnement (82) présente un second actionneur (122) permettant d'embrayer et/ou de débrayer le second arbre de transmission (58).

13. Dispositif d'accouplement (40) selon l'une des revendications 1 à 12,
**caractérisé en ce que** l'extrémité côté sortie (68, 70) de l'au moins un arbre de transmission (56, 58) peut être reliée à la section d'entrée (74, 76) de l'arbre de travail (56, 58) par l'intermédiaire d'un accouplement à denture courbe (220).

14. Dispositif d'accouplement (40) selon la revendication 13, **caractérisé en ce que** l'accouplement à denture courbe (220) présente une première partie d'accouplement (222) comportant une denture courbe (234) conçue en tant que denture intérieure et une seconde partie d'accouplement (228) comportant une denture courbe (236) conçue en tant que denture extérieure, et **en ce que**, de préférence, l'au moins un arbre de transmission (50, 52) peut être entraîné en oscillation rotative dans un mode d'embrayage afin de simplifier l'embrayage entre la première partie d'accouplement (222) et la seconde partie d'accouplement (228).

15. Installation de profilage par roulage (10) comportant une pluralité de structures de profilage par roulage (30) et un bloc d'entraînement (42) permettant d'entraîner des arbres de travail (56, 58) des structures de profilage par roulage (30), **caractérisée par** au moins un dispositif d'accouplement (40) selon l'une des revendications 1 à 14 qui est disposé entre le bloc d'entraînement (42) et au moins l'une des structures de profilage par roulage (30).
